# EUROPEAN PATENT APPLICATION

(11) **EP 2 767 894 A1**
(43) Date of publication of application: **20.08.2014**
(21) Application number: 13155354.7
(22) Date of filing: 15.02.2013
(51) Int. Cl.: G06F 3/0488, G06K 9/68

(54) **Method and apparatus pertaining to adjusting textual graphic embellishments**

(71) Applicant: BlackBerry Limited, Waterloo, ON N2K 0A7 (CA)
(72) Inventor: Mercea, Cornel, Waterloo, Ontario N2L 3W8 (CA); Mankowski, Peter, Waterloo, Ontario N2L 3W8 (CA); Wu, Xiaowei, Waterloo, Ontario N2L 3W8 (CA)
(74) Representative: Noble, Nicholas

(57) **Abstract**

Stylus-entered writing is converted into corresponding text and a control circuit then adjusts graphic embellishment of at least a first portion of that text as a function, at least in part, of detected user dynamics as regards user control of the stylus at a time that corresponds to the stylus-entered writing that corresponds to that first portion of the text. By one approach this adjustment reflects a comparison between those detected user dynamics and previously-stored user dynamics profile information. So configured, the resultant recognized text can, via the aforementioned graphic embellishment, convey emotional expression of the writer at the time of writing that text.

## Description

### Field of Technology

The present disclosure relates to electronic devices, including but not limited to portable electronic devices having stylus-based user interfaces.

### Background

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart telephones, wireless personal digital assistants (PDAs), and laptop or pad/tablet-style computers with wireless 802.11 or Bluetooth^{™} capabilities.

Some portable electronic devices support the use of a stylus as a user interface mechanism. Various styli are known and typically serve in conjunction with a scribing surface that is configured to work with a corresponding stylus. Generally speaking, a stylus is typically a hand-held writing utensil that often (but not exclusively) has a pencil-like elongated form factor and that includes at least one pointed end configured to interact with the scribing surface. Using a stylus as an input mechanism with, for example, a display offers a variety of advantages over a fingertip including the opportunity for increased precision as well as an expression modality that accords with the user's own past experience with a pencil or pen.

In some cases the user uses a stylus to input alphanumeric content via a cursive or block-letter style of handwriting. In some of these cases the portable electronic device is configured to convert that stylus-entered writing into corresponding recognized text. That recognized text can then be stored, edited, printed, and/or forwarded like any other textual content.

Though using a stylus to input text in the above manner can be very helpful and useful in and of itself, such a process can nevertheless lose something in the translation. For example, at least some emotional content being physically conveyed by the writer via their physical act of handwriting is typically absent from the recognized text.

### Brief Description of the Drawings

FIG. 1 is a screen shot in accordance with the prior art.

FIG. 2 is a flow diagram in accordance with the disclosure.

FIG. 3 is a block diagram in accordance with the disclosure.

FIG. 4 is a screen shot in accordance with the disclosure.

FIG. 5 is a screen shot in accordance with the disclosure.

FIG. 6 is a screen shot X in accordance with the disclosure.

FIG. 7 is a screen shot in accordance with the disclosure.

### Detailed Description

The following describes an apparatus and method pertaining to converting stylus-entered writing into corresponding text and then adjusting graphic embellishment of at least a first portion of that text as a function, at least in part, of detected user dynamics as regards user control of the stylus at a time that corresponds to the stylus-entered writing that corresponds to that first portion of the text. By one approach this adjustment reflects a comparison between those detected user dynamics and previously-stored user dynamics profile information. So configured, the resultant recognized text can, via the aforementioned graphic embellishment, convey physical expressions of the writer at the time of scribing the handwriting that leads to that text.

These teachings are highly flexible in practice. The detected user dynamics, for example, can comprise one or more of scribing pressure, stylus gripping pressure, scribing speed, and stylus acceleration, to note but a few examples in these regards. Similarly, the graphic embellishment can comprise, by way of some non-limiting examples, using one or more of bold font, italicized font, underlining, increased (or decreased) font size, modified font and/or background color, a changed font type, and so forth.

The aforementioned previously-stored user dynamics profile information can comprise, by one approach, a generic profile suitable for use with a variety of different writers. These teachings will also accommodate, however, developing and using a writer-specific user dynamics profile if desired. Such a writer-specific user dynamics profile can be developed, by one approach, via a dedicated calibration process. By another approach, in lieu of the foregoing or in combination therewith, such a profile can be developed via an on-the-fly calibration process.

A writer's emotions are often conveyed at least to some extent via the physical wielding of their writing instrument. By monitoring one or more ways by which a writer writes with a stylus and correlating various physical expressions of their corresponding emotions with specific written words, these teachings provide for embellishing the graphic portrayal of the corresponding recognized text in a way that reflects and/or conveys at least some sense of that emotional content. The result can be text that conveys a deeper and richer meaning and expression to the reader.

That said, these teachings permit the leveraging of that emotional content in a way that requires little or no conscious effort on the part of the writer and essentially no training or memorization of font control characters, expressions, gestures, buttons, shortcuts, or the like. Accordingly, these teachings can contribute to a greatly enhanced, more convenient, and more effective user experience.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

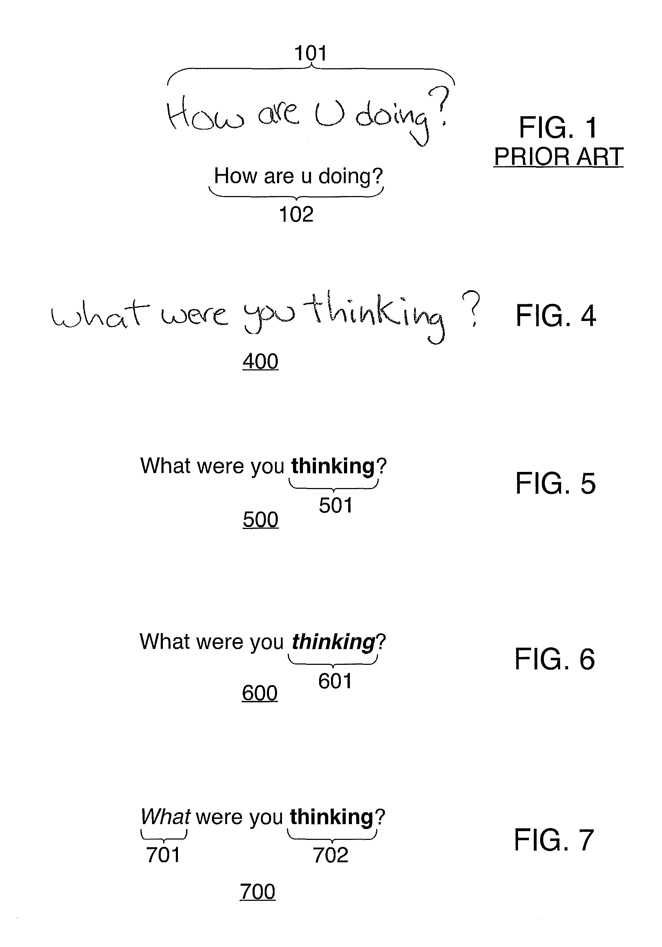

Before providing details regarding the present teachings it may be useful to first recall a not-untypical prior art approach in these regards. As shown in FIG. 1 a user employs a stylus (not shown) to handwrite alphanumeric content on a corresponding scribing surface where the handwriting results are typically rendered as electronic ink or the like. In this example the user wrote the sentence "How are U doing?" 101. The corresponding electronic device in this example recognizes that handwriting and outputs that recognized text 102 as content for a memo, a word-processing document, an email or text message, and so forth. In this example of a prior art approach the graphic presentation of the recognized text is uniform and without nexus to or regard for the physical aspects of how the writer wrote the original sentence 101.

There are various approaches known in the art regarding how to recognize handwriting and convert that handwriting into recognized text. As the present teachings are not overly sensitive to any particular choices made in these regards, for the sake of brevity further elaboration in these regards is not provided here suffice to say that these prior art approaches, while successful in many cases at recognizing the sterile informational content of the handwriting, are typically utterly ignorant of any specific user physicality that attends to the handwriting activity itself aside from, in some cases, sensing the scribing pressure from moment to moment and using that pressure to vary the width of the electronic ink line of the rendered handwriting 101 itself.

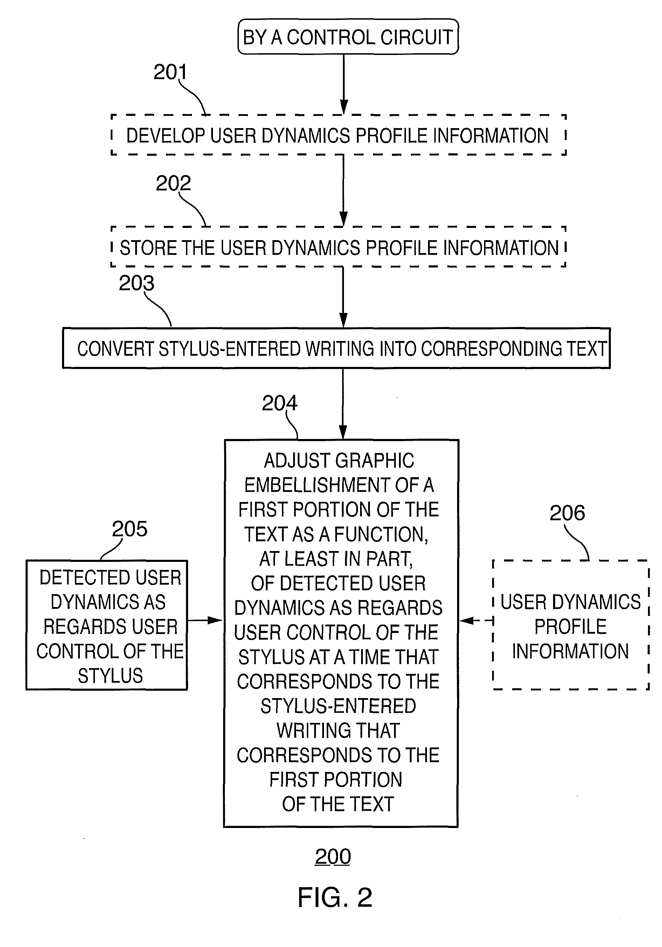

FIG. 2 presents a process 200 that corresponds in many regards with the present teachings. For the sake of an illustrative example it will be presumed here that a control circuit of choice carries out this process 200.

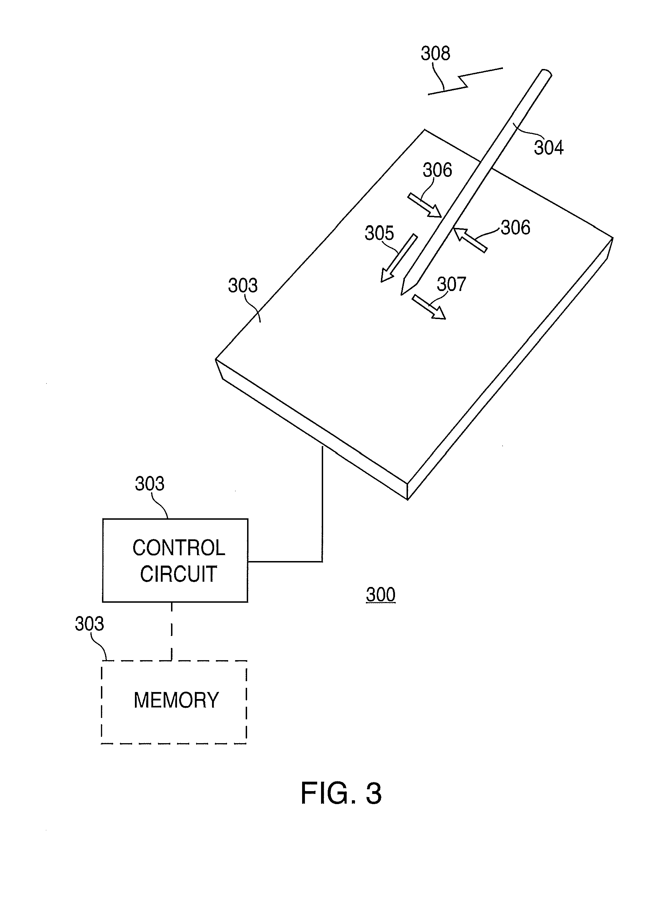

Referring momentarily to FIG. 3, such a control circuit 301 can comprise a part of a portable electronic device 300 such as a so-called smartphone or a tablet/pad-styled computer. Such a control circuit 301 can comprise a fixed-purpose hard-wired platform or can comprise a partially or wholly programmable platform. These architectural options are well known and understood in the art and require no further description here. This control circuit 301 is configured (for example, by using corresponding programming as will be well understood by those skilled in the art) to carry out one or more of the steps, actions, and/or functions described herein.

By one optional approach this control circuit 301 operably couples to a memory 302. The memory 302 may be integral to the control circuit 301 or can be physically discrete (in whole or in part) from the control circuit 301 as desired. This memory 302 can also be local with respect to the control circuit 301 (where, for example, both share a common circuit board, chassis, power supply, and/or housing) or can be partially or wholly remote with respect to the control circuit 301 (where, for example, the memory 302 is physically located in another facility, metropolitan area, or even country as compared to the control circuit 301).

This memory 302 can serve, for example, to non-transitorily store the computer instructions that, when executed by the control circuit 301, cause the control circuit 301 to behave as described herein. (As used herein, this reference to "non-transitorily" will be understood to refer to a non-ephemeral state for the stored contents (and hence excludes when the stored contents merely constitute signals or waves) rather than volatility of the storage media itself and hence includes both non-volatile memory (such as read-only memory (ROM) as well as volatile memory (such as an erasable programmable read-only memory (EPROM).)

The control circuit 303 in this example operably couples to a scribing surface 303 for a corresponding stylus 304 that also comprises a display to present, for example, electronic ink as corresponds to interactions between the stylus 304 and the scribing surfaced 303 as well as recognized text. There are numerous such scribing surfaces known in the art that employ any of a variety of stylus location and movement/tracking methodologies/technologies. Accordingly, no further details will be provided here for the sake of brevity.

The stylus 304 itself is configured to detect one or more user dynamics as regards user control of the stylus 304 when writing on the scribing surface 303. Numerous such detectors are known in the art and include detectors to detect scribing pressure 305 (i.e., the pressure employed by the user when pressing the stylus 304 against the scribing surface 303), detectors to detect stylus gripping pressure 306 (i.e., the pressure employed by the user to grip the stylus 304 at any given moment), and detectors to detect scribing speed and/or stylus acceleration 307. The present teachings will accommodate using any of the foregoing (alone or in any combination with one another) or such other detectors as may be available to detect a user dynamic of interest.

For the sake of an illustrative example the remainder of this description will presume that the stylus 304 has at least one scribing pressure detector. It will be understood, however, that no particular limitations are intended to be suggested by this presumption.

The stylus 304 is also configured to wirelessly transmit information 308 regarding the detected user dynamics (i.e., in this illustrative example, the scribing pressure 305 being applied by the writer). This wireless transmission can comprise, for example, a radio frequency wireless transmission (such as, but not limited to a Bluetooth^{™}-compatible wireless transmission), a wireless transmission employing an optical carries, a wireless transmission via an ultrasonic carries, and so forth.

Generally speaking these teachings presume sampling the monitored user dynamic on a relatively frequent basis in order to discern, for example, different scribing pressures being applied by the writer on a word-by-word basis and/or an alphanumeric character-by-character basis. By one approach the wireless transmissions 308 of such information can occur on a similarly frequent basis.

By one approach, each such transmission can include fresh information regarding presently-detected scribing pressure in its entirety. By another approach a delta approach can serve in these regards. In that case the transmitted information may only represent a change, if any, from a previously-represented value (or values) for the detected scribing pressure.

Referring again to FIG. 2, at 201 this process 200 can optionally provide for developing user dynamics profile information. Once developed, at 202 that user dynamics profile information can be stored (for example, at the aforementioned memory 302).

By one approach, the control circuit 301 can develop that user dynamics profile information, at least in part, via a dedicated calibration process with the user. For example, a wizard approach can serve to walk the user through a series of writing examples to determine, at a minimum, a baseline scribing pressure (or range of ordinary scribing pressures) that the user ordinarily applies when scribing with the stylus 304. (When detecting other user dynamics, similar metrics can be developed for the user dynamic(s) of interest. For example, when employing stylus acceleration as a detected user dynamic this activity can comprise exercising the writer's writing style to determine the acceleration events that typify the ordinary writing style of the writer.)

By another approach, in lieu of the foregoing or in combination therewith, the control circuit 301 can develop the user dynamics profile information, at least in part, via an on-the-fly calibration process with the user. "On-the-fly" refers to during the course of ordinary usage of the stylus 304 and the scribing surface 303 rather than pursuant to some specific calibration exercise. As one example in these regards, the control circuit 301 can respond to particular levels of detected user dynamics as disclosed further below with particular adjustments to the below-described graphic embellishments. If and as the user responds (for example, with corrections to the automatically-effected adjustments) the control circuit 301 can treat such corrections (or the lack of a correction to a given automatic adjustment) as input to calibrate the parameters, settings, and/or rules that comprise at least in pars the aforementioned user dynamics profile information.

In any event, this process 200 provides at 203 for converting stylus-entered writing (which may assume any of a variety of forms including cursive writing, block-letter writing, Graffiti^{™}-style writing, and so forth) into corresponding recognized text. As noted above there are any of a variety of ways to make such a conversion and the present teachings are not unduly sensitive to any particular choices in these regards.

At 204 the control circuit 301 then adjusts the graphic embellishment of portions of the recognized text as appropriate. This adjustment can occur as a function, at least in part, of the aforementioned detected user dynamics 205 as regards user control of the stylus 304. In particular, this adjustment can take into account such detected user dynamics at times that correspond to the stylus-entered writing.

As a simple example in these regards, it will be presumed that the writer scribed the handwritten sentence "What were you thinking?" 400 as shown in FIG. 4. Presuming that the writer employed a greater amount of scribing pressure when writing the word "thinking," the control circuit 301 can determine to adjust the graphic embellishment of the corresponding text (i.e., the recognized text "thinking" 501) as shown in FIG. 5. In particular, the word "thinking" 501 in the displayed recognized-text sentence 500 is rendered in bold font rather than in the unembellished font employed for the rest of the sentence 500.

So configured, the control circuit 301 automatically renders the presentation of the recognized text version of a handwritten stylus-based input to account for dynamic changes in pressure during the handwriting of that input. In this case, a suitably increased level of pressure serves to cause the presentation of a portion of the recognized text to appear in bold font. Since, in this example, the writer only employed that increased pressure when writing that one word, it is only the graphic embellishment of that one word in the recognized-text version that is adjusted accordingly.

The applicants have determined that such variations in scribing pressure can correlate to corresponding momentary emotions of the writer. Accordingly, at least in many cases, automated adjustment of graphic embellishments as described can serve to accurately reflect and convey the writer's emotions of the moment.

These teachings will accommodate adjusting a wide variety of graphic embellishments. Examples in these regards include, but are certainly not limited to, adjusting (or otherwise using) bold font, italicized font, underlining, increasing or decreasing font size, modifying font color and/or background font color, changing the font type, and so forth.

These teachings will also accommodate using more than one of these styles of graphic embellishment in a single use-case to convey a range of detected user dynamics. As a simple illustrative example, if the writer of the handwritten sentence 400 shown in FIG. 4 employed heavier scribing pressure than normal, but less than the amount that triggered the use of bold font as shown in FIG. 5, the word "thinking" 601 can be rendered using italics as shown in FIG. 6 (where the remainder of the rendered recognized-text sentence 600 is again otherwise portrayed using unembellished graphics).

Accordingly, and by way of a related simple example, if the writer employed somewhat heavier scribing pressure when writing the word "What" and heavier-yet scribing pressure when writing the word "thinking," the resultant rendered recognized-text sentence 700 (as shown in FIG. 7) could have one word (i.e., "What" as denoted by reference numeral 701) that employs one kind of graphic embellishment adjustment (i.e., italics) and another word (i.e., "thinking" as denoted by reference numeral 702) that employs another, different kind of graphic embellishment adjustment (i.e., bold font).

If desired, the described adjustments can take into account the aforementioned user dynamics profile information 206 when available. Such an approach can comprise, for example, comparing the detected user dynamics 205 with the user dynamics profile information 206 to identify instances where, for example, previously-established rules regarding such adjustments can be applied as a function of such comparisons.

In the examples provided above the control circuit 301 applies the graphic embellishment adjustments on a word-by-word basis. These teachings will accommodate other approaches in these regards if desired, however. By one approach, for example, if the writer writes only a single word in a given handwritten sentence using a given level of scribing pressure, these teachings will accommodate presenting the entirety of the handwritten sentence with a graphic embellishment adjustment that corresponds to that given level of scribing pressure.

So configured, the recognized-text version of handwritten input can be automatically embellished to reflect detected user dynamics as regards the user control of the stylus 304. These embellishments, in turn, can enhance the appearance and/or depth of meaning of the resultant text without requiring the user to do anything in particular other than simply execute their handwriting in their own personal way.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An apparatus (300) comprising:
a control circuit (303) configured and arranged to:
- convert (203) stylus-entered writing into corresponding text;
- adjust (204) graphic embellishment of a first portion of the text as a function, at least in part, of detected user dynamics (205) as regards user control of the stylus (304) at a time that corresponds to the stylus-entered writing that corresponds to the first portion of the text.

2. The apparatus of claim 1 wherein the control circuit is configured to adjust the graphic embellishment of the first portion of the text by using at least one of:
bold font;
italicized font;
underlining;
an increased font size;
a decreased font size;
a modified font color;
a modified background color;
a changed font type.

3. The apparatus of claim 1 wherein the control circuit is configured to adjust the graphic embellishment of the text on a word-by-word basis.

4. The apparatus of claim 1 wherein the detected user dynamics as regards user control of the stylus comprise at least one of:
scribing pressure (305);
stylus gripping pressure (306);
scribing speed (307);
stylus acceleration (307).

5. The apparatus of claim 1 wherein the control circuit is further configured to adjust the graphic embellishment of the first portion of the text as a function, at least in part, of detected user dynamics as regards user control of the stylus by comparing the detected user dynamics with previously-stored user dynamics profile information (206).

6. The apparatus of claim 5 wherein the previously-stored user dynamics profile information represents only a particular user.

7. The apparatus of claim 5 wherein the control circuit is further configured to:
develop (201) the user dynamics profile information;
store (202) the user dynamics profile information to provide the previously-stored user dynamics profile information.

8. The apparatus of claim 7 wherein the control circuit is configured to develop the user dynamics profile information, at least in part, via a dedicated calibration process with a user.

9. The apparatus of claim 7 wherein the control circuit is configured to develop the user dynamics profile information, at least in part, via an on-the-fly calibration process with a user.

10. A method comprising:
by a control circuit (303):
converting (203) stylus-entered writing into corresponding text;
adjusting (204) graphic embellishment of a first portion of the text as a function, at least in part, of detected user dynamics as regards user control of the stylus (304) at a time that corresponds to the stylus-entered writing that corresponds to the first portion of the text.

11. The method of claim 10 wherein adjusting graphic embellishment of a first portion of the text comprises adjusting the graphic embellishment by using at least one of:
bold font;
italicized font;
underlining;
an increased font size;
a decreased font size;
a modified font color;
a modified background color;
a changed font type.

12. The method of claim 10 wherein the control circuit is configured to adjust the graphic embellishment of the text on a word-by-word basis.

13. The method of claim 10 wherein the detected user dynamics as regards user control of the stylus comprise at least one of:
scribing pressure (305);
stylus gripping pressure (306);
scribing speed (307);
stylus acceleration (307).

14. The method of claim 10 wherein the control circuit is further configured to adjust the graphic embellishment of the first portion of the text as a function, at least in part, of detected user dynamics as regards user control of the stylus by comparing the detected user dynamics with previously-stored user dynamics profile information (206).

15. The method of claim 14 further comprising:
developing (201) the user dynamics profile information;
storing (202) the user dynamics profile information to provide the previously-stored user dynamics profile information.
